(19)

Europäisches Patentamt

European Patent Office

Office européen des brevets

(11) **EP 2 487 829 A1**

(12) **EUROPEAN PATENT APPLICATION**

(43) Date of publication:
**15.08.2012 Bulletin 2012/33**

(51) Int Cl.:
*H04L 9/08* (2006.01)     *H04L 9/32* (2006.01)

(21) Application number: **12152266.8**

(22) Date of filing: **24.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.02.2011 EP 11305134**

(71) Applicant: **Thomson Licensing
92130 Issy-les-Moulineaux (FR)**

(72) Inventor: **Karroumi, Mohamed
92443 Issy Les Moulineaux (FR)**

(74) Representative: **Ståhl, Björn Niclas et al
Technicolor
European Patents Operations
1-5, Rue Jeanne d'Arc
92443 Issy-les-Moulineaux (FR)**

(54) **Method and device for generating control words**

(57) Generation of n control words for encryption of a content item. A device (200) obtains a first key $K_{start}$ and a second key $K_{end}$; generates (S42) the n control words using the formula: $CW_i = h_1^i(K_{start}) \oplus h_2^{n-i}(K_{End})$, $i = 0 \ldots n-1$, wherein **$CW_i$** denotes control word $i$, $h_1$ and $h_2$ denote one-way functions, and $\oplus$ denotes a combination operation; and outputs the n generated control words. At least one one-way function is preferably a hash function and the combination operation is preferably XOR. In an embodiment, a license is generated (S43) for the content item encrypted using the generated control words, the license comprising the first key $K_{start}$, the second key $K_{end}$ and the integer n; and the license is transmitted (S44) to a receiver. A method and a device (200) are provided. An advantage is that it is possible to send to a receiver a third key and a fourth key that lie between the first and the second key and that the receiver is unable to generate key words lying 'outside' the third and fourth key.

Figure 3

EP 2 487 829 A1

**Description**

<u>TECHNICAL FIELD</u>

The present invention relates generally to Digital Rights Management (DRM), and more particularly to the generation of Control Words for DRM protected digital content.

<u>BACKGROUND</u>

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

DRM solution are often considered as user unfriendly, a common complaint being that DRMs prohibit fair use as defined by the Digital Millennium Copyright Act, 1998 [see http://www.copyright.gov/legislation/dmca.pdf]. Among the many things considered as part of fair use is the right of an end user to cite or use an excerpt of a work, i.e. content item, for criticism, scholarship and so on. This is however not possible with the prior art DRM solutions.

There is thus a need for a DRM solution that can:

- Protect a content item against illegal or unauthorized use.
- Allow an end user to extract a portion of the content item and redistribute the portion to other end users who may then access the portion, regardless of whether or not these end users have access rights to the entire content item.
- Make it difficult for colluding end users to distribute an entire work freely by concatenating a set of excerpts of the work.

This may advantageously be achieved by splitting the content into a plurality of blocks, each of which is scrambled using a control word that is generated from a master control word for the content. One or more blocks may then be sent by a first end user to second end user, the blocks being accompanied by a license that comprises the generated control words, not the master control word. With a suitable algorithm for the generation of control words, it can be ascertained that the second end user is not able to access other blocks of the content.

The prior art provides a number of solutions for control word (encryption key) generation.

For example, US 2006/0034453 describes a system in which a block is encrypted using a hash value, after which the encrypted block and the hash value are hashed to generate the hash value used to encrypt the following block. Further, EP 2197145 describes a key generation system in which a key is obtained by combining a block with a key used for the previous block. A problem with these systems is that it is thus not possible to limit the decryption in one 'direction'.

This problem is to a certain extent overcome by Marc Joye and Sung-Ming Yen in One-Way Cross-Trees and Their Applications; D. Naccache and P. Pallier, Eds., Public Key Cryptography, vol. 2274 of Lecture Notes in Computer Science, pp. 346-356, Springer Verlag, 2002. Their solution is to start from one secret for which either the left or the right half is hashed to produce a new secrets, thus generating a binary tree of secrets. Each secret may then for example be hashed to generate a key. This solution can make it impossible to generate further keys from a number of received keys. Although the tree provides different path for the key derivation, the process always follows a top-down direction, starting from a node of the tree and going down to a low level node.

The present invention provides an alternative solution, that uses two or more secrets for which the derivation process are done in the opposite ways which makes it possible to limit derivation of the decryption keys in several opposite 'directions'.

<u>SUMMARY OF INVENTION</u>

In a first aspect, the invention is directed to a device for generating n control words for encryption or decryption of n contiguous units of a content item, wherein n is an integer. The device comprises a processor adapted to: obtain a first key $K_{start}$ and a second key $K_{end}$; generate a first ordered set of n subkeys by iteratively applying a first one-way function to the first key $K_{start}$ and a second ordered set of n subkeys by iteratively applying a second one-way function to the second key $K_{end}$; generate n control words by iteratively using a combination operation to generate control word $i$ from subkey $i$ from the first ordered set of n subkeys and subkey $n-i-1$ from the second ordered set of n subkeys, wherein $i$ is between 0 and n-1, inclusive; and output the n generated control words.

In a first preferred embodiment, at least one of the first one-way function and the second one-way function is a hash function.

In a second preferred embodiment, at least one of the first one-way function and the second one-way function is public key encryption.

In a third preferred embodiment, the combination operation is XOR.

In a fourth preferred embodiment, the combination operation is concatenation or public key encryption or symmetric key encryption.

In a fifth preferred embodiment, the processor is further adapted to separate the content item into a plurality of parts, each part comprising a plurality of units; and to generate control words independently for each part.

In a sixth preferred embodiment, the processor is further adapted to generate a license for the content item of which unit *i* has been encrypted using generated control word *i*, the license comprising the first key $K_{start}$, the second key $K_{end}$ and the integer n; and transmit the license to a receiver. It is advantageous that the content item is an excerpt of a longer content item, the longer content item being encrypted using control words generated from a third key and a fourth key, and that the processor is further adapted to generate the first key $K_{start}$ by iterative application of the first one-way function to the third key; and generate the second key $K_{end}$ by iterative application of the second one-way function to the fourth key.

In a seventh preferred embodiment, the content item is encrypted and the processor is further adapted to decrypt the encrypted content item using the generated control words.

In a second aspect, the invention is directed to a method for generating n control words for encryption or decryption of n contiguous units of a content item, wherein n is an integer. A device obtains a first key $K_{start}$ and a second key $K_{end}$; generates a first ordered set of n subkeys by iteratively applying a first one-way function to the first key $K_{start}$ and a second ordered set of n subkeys by iteratively applying a second one-way function to the second key $K_{end}$; generates n control words by iteratively using a combination operation to generate control word *i* from subkey *i* from the first ordered set of n subkeys and subkey *n-i-1* from the second ordered set of n subkeys, wherein *i* is between 0 and n-1; and outputs the n generated control words.

In a first preferred embodiment, at least one of the first one-way function and the second one-way function is a hash function.

In a second preferred embodiment, the combination operation is XOR.

In a third preferred embodiment, the method further comprises the step of separating the content item into a plurality of parts, each part comprising a plurality of units; and wherein the steps of the method of the second aspect are performed independently for each part.

In a third aspect, the invention is directed to a method of generating a content license for a content item being encrypted using control words generated by the method of the second aspect. A device generates a license for the content item of which unit *i* has been encrypted using generated control word *i*, the license comprising the first key $K_{start}$, the second key $K_{end}$ and the integer n; and transmits the license to a receiver.

In a first preferred embodiment, the content item is an excerpt of a longer content item, the longer content item being encrypted using control words generated from a third key and a fourth key, and wherein the method further comprises the steps of generating the first key $K_{start}$ by iterative application of the first one-way function to the third key; and generating the second key Kend by iterative application of the second one-way function to the fourth key.

BRIEF DESCRIPTION OF DRAWINGS

Preferred features of the present invention will now be described, by way of non-limiting example, with reference to the accompanying drawings, in which

Figure 1 illustrates an exemplary field of use of a preferred embodiment of the present invention;
Figure 2 illustrates a scrambling device according to a preferred embodiment of the present invention;
Figure 3 illustrates scrambling key generation according to a first preferred embodiment of the present invention; and
Figure 4 illustrates excerpt generation, transmission and reception according to the first preferred embodiment of the present invention.

DESCRIPTION OF EMBODIMENTS

A main idea of the present invention is to generate at least one scrambling key (i.e. encryption and decryption key) that can be delivered to a receiver, while making sure that the receiver is not able to use the at least one scrambling key to generate further scrambling keys.

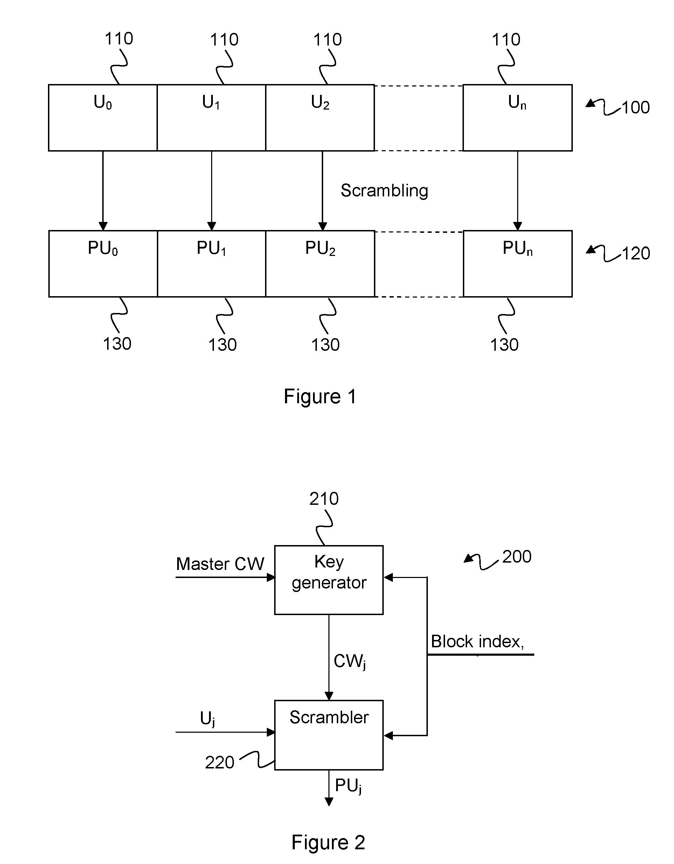

An exemplary field of use is illustrated in Figure 1. An item of content 100 is divided into a plurality of blocks 110. Each block ($U_j$) 110 is identified by a block index (j), which advantageously, but not necessarily, is sequential. The content 100 thus comprises the set of blocks {$U_0$, $U_1$, $U_2$,..., $U_n$}.

Scrambling (also called encryption) of the content 100 is described with further reference to Figure 2, which illustrates a scrambling device 200 that comprises a key generator 210 and a scrambler 220. The scrambling device 200 may be implemented as one or more processors. The skilled person will appreciate that encryption and decryption are essentially the same for symmetric encryption algorithms; they use the same key and the same algorithm for processing input data to generate output data.

To scramble the content 100, its blocks 110 are scrambled separately. The key generator 210 generates a block CW for each block 110 to scramble. The block indices that the key generator 210 works from may be generated internally (if the indices are sequential) up to a final block index obtained for example from the content 110; the block indices may also be provided by a control circuit (not shown) or by the scrambler after inspection of the block to scramble. The generated block control word $CW_j$ is delivered to the scrambler 220, possibly along with the corresponding block index, but the scrambler 220 may also receive the block index from the control circuit. A further possibility is for the key generator and the scrambler to be synchronised, in which case a block CW could be delivered when needed by the scrambler. The scrambler 220 receives a block $U_j$ and uses the block CW to scramble the block $U_j$ and outputs a protected block $PU_j$.

This is also illustrated in Figure 1, wherein the blocks $U_j$ of the content 110 in the upper row are scrambled as protected blocks $PU_j$ 130 of a protected content 120 in the lower row.

The skilled person will appreciate that there is no structural difference between a scrambler and a descrambler when the scrambling algorithm is symmetrical. Indeed, both scrambler and descrambler take input data and use essentially the same algorithm with the same key to produce output data; the only difference is that one takes cleartext to produce ciphertext while the other does the opposite. Figure 2 can thus also illustrate, mutatis mutandis, a descrambling device 200.

First preferred embodiment

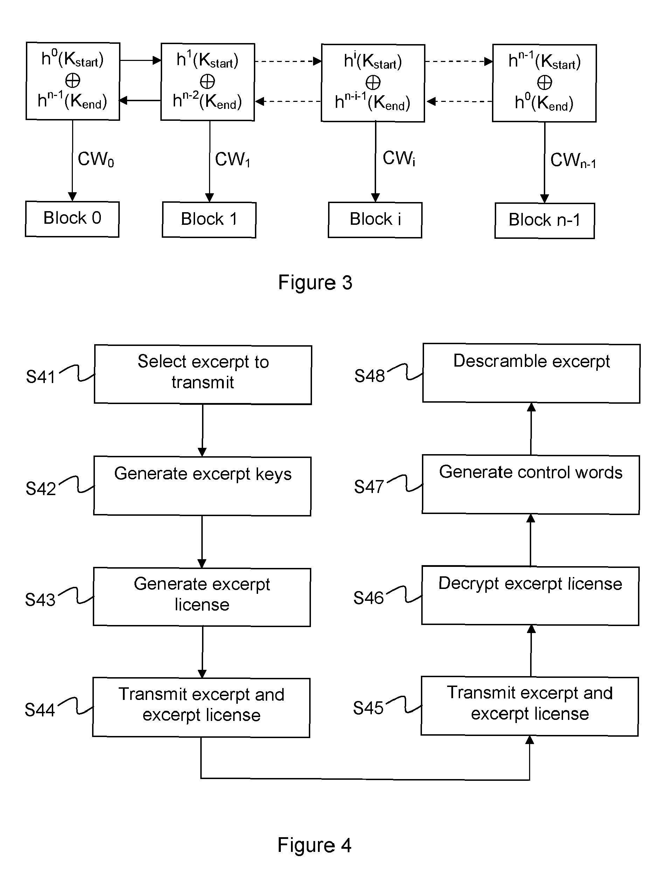

Figure 3 illustrates scrambling key generation and Figure 4 illustrates excerpt generation, transmission and reception according to a first preferred embodiment of the present invention. Two, preferably random, master keys $K_{start}$ and $K_{end}$ are generated for the content. If the number of blocks to scramble is n, then each master key is then processed by a one-way function $h$ (advantageously a hash function, but possibly other functions such as encryption using the public key of a public key encryption algorithm) at least n-1 times, resulting in n sub-keys generated from each master key: $K_{s1}$-$K_{sn}$ and $K_{e1}$-$K_{en}$. For illustration, it may be said that the end key is turned around so that $K_{e1}$ finds itself at the end and $K_{en}$ at the beginning.

Then, for each block, the key $K_{si}$ is combined with the key $K_{e(n-i)}$ to generate the block CW. The combination operation can be practically any arithmetic operation such as public key or symmetric key encryption, any binary operation, a concatenation operation, provided that the length of the sub-key corresponds to the key length required by the scrambling algorithm. The preferred combination is exclusive-or (XOR).

In mathematical notation, the first block has index 0 and the last block index n-1. Each sub-key CW is generated from the two master keys by the following formula:

$$CW_i = h^i(K_{start}) \oplus h^{n-i}(K_{End}) , \ i = 0 \ldots n\text{-}1,$$

$$(\text{Equation 1})$$

where $h$ is the one-way function. $h^m$ denotes $m$ iterations of the one-way function.

The scrambled content may then be transmitted to an end user that may also receive (not necessarily together with the content) a general content license that comprises the master keys $K_{Start}$ and $K_{End}$ and is encrypted with a user key Ku that preferably is specific to the user; it is advantageous that the user key is the user's public key in an asymmetric encryption system.

To descramble the content, the user first decrypts the licence using its user key Ku (or its corresponding private key) and then uses the master keys $K_{Start}$ and $K_{End}$ to generate the sub-keys that are used to descramble the content. The sub-keys are generated using the formula of Equation 1.

When a first user wishes to share an excerpt, *m+1* consecutive blocks from block *x* to block *x+m*, of the content with a second user, the first user selects these consecutive blocks, step S41. The first user device then generates, step S42, two derivative keys $K'_{Start}$ and $K'_{End}$:

- $K'_{Start} = h^x(K_{Start})$,
- $K'_{End} = h^{n-x-m}(K_{End})$.

It will be appreciated that $K'_{Start}$ is the scrambling key for the first block of the excerpt and that $K'_{End}$ is the scrambling key for the last block of the excerpt. The two derivative keys are then embedded in an excerpt license that is encrypted using an encryption key (symmetric or, preferably, asymmetric) for the second user, step S43. The first user device then sends the excerpt and the excerpt license to the second user, step S44.

Upon reception of the excerpt and the excerpt license, step S45, the second user device decrypts the excerpt license (using a corresponding key), step S46. The derivative keys are then hashed $m$ times and combined to generate, step 47, the sub-keys for the blocks of the excerpt using the formula similar to that of Equation 1 (substituting $K'_{Start}$ for $K_{Start}$, $K'_{End}$ for $K_{End}$, $x$ for $i$, and $n$-$x$-$m$ for $n$-$i$).

Put another way, each sub-key is computed as follows:

$$Kb_j = h^{j-x}(K'_{Start}) \oplus h^{x+m-j}(K'_{End}) \, , \, j = x \ldots x+m.$$

The excerpt may then be descrambled using the sub-keys, step S48, and rendered.

An advantage of the key generation of the present invention is that an excerpt licence contains only two keys, regardless of the length of the excerpt. From these two (derivative) keys, all the sub-keys for the block within the excerpt can be easily computed.

Moreover, knowledge of the sub-keys within the shared portion does not permit computation of sub-keys outside the excerpt. To compute these 'external' sub-keys, it is necessary to calculate the sub-keys for blocks preceding the index $x$ with knowledge of $K'_{Start}$ as well as the sub-keys for blocks following the index $x+m$ with knowledge of $K'_{end}$, but this requires inverting the one-way function $h$ which is computationally infeasible.

In detail, the first preferred embodiment takes an unencrypted content stream as input, the content stream being a Moving Pictures Experts Group 2 (MPEG2) content stream. MPEG2 is a well known encoding and compression standard for digital broadcast content and described in ISO/IEC 13818-1, Information technology -- Generic coding of moving pictures and associated audio information--Part 1: Systems, 2007.

An MPEG2 stream comprises Packetized Elementary Streams (PES), which include fixed or variable sized frames. Each PES packet is broken into fixed-sized (188 bytes) transport packet known as MPEG2 Transport Streams (TS) that contains a combination of audio and video data. When protecting MPEG2 content stream, each TS packet is encrypted with a control word (*CW*). The *CW* changes every period of 10 seconds (i.e. a crypto-period lasts 10 s). In a set-top-box architecture, a security module of the set-top box receives Entitlement Control Messages (ECMs) that comprise the encrypted *CWs*. The security module delivers the correct *CW* (ODD or EVEN) to a descrambler module, which then applies the ODD/EVEN *CW* to the scrambled TS at the right time and outputs descrambled TS packet.

Each content provider has a specific secret or public information *Ip* and each user has received from a centre a certified 1024-bit RSA key pair (*Kpub, Kpriv*). The content provider key *Kp* is known by the centre; the user private key $Kpriv_a$ as well as *Ip* are securely stored in the user's set-top-box.

Further in the first preferred embodiment:

- The one-way function $h$ is the SHA1 hashing algorithm.
- The TS scrambling algorithm is AES-128 in CBC mode. See NIST, FIPS PUB 197, "Advanced Encryption Standard (AES)," November 2001 http://csrc.nist.gov/publications/fips/fips197/fips-197.pdf; and S. Frankel, R. Glenn and S. Kelly, "The AES-CBC Cipher Algorithm and Its Use with IPsec," RFC 3602, Internet Soc., Sept. 2003; http://rfc.sunsite.dk/rfc/rfc3602.html.
- The licence encryption algorithm is RSA Optimal Asymmetric Encryption Padding (OAEP) with 1024-bit key length. For more details, see: RFC 3560, July 2003, R. Housley, Use of the RSAES-OAEP Key Transport Algorithm in the Cryptographic Message Syntax (CMS); M. Bellare and P. Rogaway: Optimal Asymmetric Encryption - How to Encrypt with RSA. In: A. De Santis (ed.) EUROCRYPT 1994. LNCS, vol. 950, pp. 92-111. Springer, Heidelberg (1995); and RSA Laboratories, PKCS #1 v.2.1: RSA Cryptography Standard, June 2002.

As an illustrative example, the content is a two-hour movie. This means that the content is scrambled using (2h)*(60min/h)*(60s/min)*(1 CW/10s) = 720 CWs, $CW_0$-$CW_{719}$.

Further, *CW'* and *CW''* are the two 128-bit master keys generated at random by the centre. Each $CW_i$ is generated from the two master keys using the following formula (adapted from Equation 1):

$$CW_i = h^i(Ip||CW') \oplus h^{719-i}(Ip||CW'') \, , \, i = 0 \ldots 719.$$

TS packets within a crypto-period $i$ are scrambled $TS\_ENC = AES\text{-}128\text{-}ENC\ (CW_i, TS)$. Given that the output of SHA1 is 160 bits, $CW_i$ is 160 also bits. In order to fit the AES key size (128 bits), each $CW_i$ is truncated to 128 bits, for example by discarding the 32 most significant bits or the 32 least significant bits.

The master keys $CW'$ and $CW''$ are embedded in one ECM = $\{CW', CW''\}$, which also comprises a 128-bit provider identifier information PID. The PID is helpful for knowing which provider information $Ip$ to use with which content. The ECM also comprises the total number of $CWs$ necessary (this 2-byte field is helpful for computing the hash indices). Before distributing the content to the user, the 400-bit ECM = $\{CW', CW'', CW\_count = 720, PID\}$ is encrypted with the user public key $Kpub_a$, i.e. ECM_ENC = $RSA\text{-}1024\text{-}ENC\ (Kpub_a, ECM)$.

To descramble the content, the security module decrypts the ECM using private user key $Kpriv_a$. Then, using the PID information, the security module knows which provider information $Ip$ to use. The security module then generates, using the same CW generation algorithm as the centre, the control word $CW_i$ for the scrambled TS packets composing the protected multimedia content from the master keys $CW'$ and $CW''$, the provider information $Ip$ and $CW\_count$.

To keep the CW calculations low, i.e. to avoid generating the same values several times, it is advantageous to generate the $CWs$ as follows:

1- Upon reception of the master control words $CW'$ and $CW''$, generate the 'second parts' of all the control words from $CW''$

$$CW''_i = h^{619-i}(Ip\|CW''),$$

where $i$ starts at $CW\_count\text{-}1 = 619$ and is decremented until reaching 0.
2- Store these second parts in a list L in a memory together with the 'first part' of the first $CW, CW' = CW'_0$

$$L = \{CW', CW''_0, CW''_1 \ldots CW''_{619} = CW''\}.$$

(This requires about 12kb (721*16 = 11586 bytes) of memory for a 2-hour movie)
3- To compute the first $CW$, calculate $CW_0 = CW'_0 \oplus CW''_0$, where $CW'_0$ and $CW''_0$ were retrieved from $L$.
4- Update $CW'_0$ in the list $L$ by the first part of the next control words, i.e. $CW'_0 \leftarrow h(Ip\|CW') = CW_1$.
5- For each scrambled TS packet, repeat steps 3-4 until the final CW is generated, $CW_{619} = CW'_{619} \oplus CW''_{619}$.

The skilled person will appreciate that this method requires some memory space but saves many computation steps.

Assuming that the first user wishes to share a 10-minute excerpt of the content with the second user, the excerpt being located at 60 minutes from the start of the movie start. The 10-minute excerpt has been scrambled using 6*10 = 60 $CWs$. The starting and ending $CW$ of the excerpt are, respectively, $CW_{360}$ and $CW_{419}$.

For the excerpt, the first user's security module generates two excerpt keys $CW\_e'$ and $CW\_e''$ from the master keys $CW'$ and $CW''$ as follows:

- $CW\_e' = h^{360}(Ip\|CW')$,
- $CW\_e'' = h^{619-419}(Ip\|CW'') = h^{300}(Ip\|CW'')$.

The keys $CW\_e'$ and $CW\_e''$ are embedded in an excerpt ECM, EECM - $\{CW\_e', CW\_e'', CW\_count=60, PID\}$. Before distributing the scrambled excerpt to the second user, the security module encrypts the EECM with the second user's public key $Kpub_b$, i.e. EECM_ENC = $RSA\text{-}1024\text{-}ENC\ (Kpub_b, EECM)$.

Upon reception of the scrambled excerpt, the second user's security module decrypts the 1024-bit EECM_ENC using the second user's private key $Kpriv_b$. Then each control word $CW_j$ for the TS packets in crypto-period $j$ within the portion is calculated as follows:

$$CW_j = h^j(Ip\|CW\_e') \oplus h^{59-j}(Ip\|CW\_e'') ,\ j = 0 \ldots 59.$$

Using these control words, the scrambled excerpt may then be descrambled and rendered to the second user.
The skilled person will appreciate that in prior-art systems, the CWs used for scrambling/descrambling were generated at random and were independent one another. A security module had to receive and decrypt an ECM for each TS packet, which makes several hundreds of ECMs to process for a protected content (at least 720 ECMs for a 2-hour movie). According to the first embodiment of the present invention however, the security module needs only a single ECM or EECM per content, as it is possible to use that ECM/EECM to generate the CWs necessary for content descrambling. It will thus be appreciated that the first embodiment of the present invention can save transmission bandwidth.

Second preferred embodiment

While the solution provided by the first preferred embodiment is compact, it is however not resistant to collusion attacks. An attacker that has access to two non-consecutive excerpts of a content may generate control words for all the packets that lie between the two excerpts; if the excerpts correspond to the beginning and the end of the content, then all the control words for the content may be generated.
The second preferred embodiment provides resistance to collusion attacks by separating the content into a plurality of logical parts. Each part comprises less than the entire content and more than a single block. As an illustrative example, each part is 10 minutes (i.e. 60 blocks) long, but it may be shorter or longer.
The control words for each part are generated independently of the control words for other parts, as if each part were an entire content item.
In other words (continuing the movie example), for every 10 minutes of the movie content, the centre generates two 128-bit master keys $CW'[k]$ and $CW''[k]$, $k=0..11$ (which represents 24 master keys for a 2-hour movie). Each $CW_i[k]$ is generated from the master keys using the following formula:

$$CW_i[k] = h^i(Ip||CW'[k]) \oplus h^{59-i}(Ip||CW''[k]) \, , \, i= 0\ldots59, \, k=0\ldots11.$$

It can be seen that this gives rise to two types of periods: a lower crypto-period of 10 seconds where the CW changes (index $i$ in the formula changes while $k$ remains fixed) and a higher crypto-period of 10 minutes where master keys $CW'$ and $CW''$ changes (index $k$ in the formula changes; $i$ is reset to 0 at the beginning of the period).
TS packets within the crypto-periods $\{i, k\}$ are scrambled as $TS\_ENC = AES\text{-}128\text{-}ENC (CW_i[k], TS)$.
In this case, instead of having one unique ECM for the whole content, there are 12 ECMs that each contains a different pair of master keys; $ECM_k = \{CW'[k], CW''[k], CW\_count=60, PID\}$. It should be noted that it also is possible for the parts to be of different lengths, as long as $CW\_count$ is adjusted accordingly.
If a user can only share excerpts that are shorter than 10 minutes (and do not straddle part boundaries), it is only necessary to transmit one EECM. Assume that the first user wishes to share a 5-minute portion of the content with the second user. The portion is located at 60 minutes from the start of the movie. The 5-minutes excerpt is protected with 6*5 = 30 $CWs$ derived from the master keys $\{CW'[6], CW''[6]\}$ (as the excerpt is located in 'higher' crypto-period 7). The starting and ending CW of the excerpt are respectively $CW_0[6]$ and $CW_{29}[6]$.
The security module generates two keys $CW\_p'$ and $CW\_p''$ from the master keys $CW'[6]$ and $CW''[6]$ as follows:

- $CW\_p' = h^0(Ip||CW'[6]) = CW_0[6] = CW'[6]$,
- $CW\_p'' = h^{59-29}(Ip||CW''[6]) = h^{30}(Ip||CW''[6])$.

The keys $CW\_p'$ and $CW\_p''$ are then embedded in an EECM = $\{CW\_p', CW\_p'', CW\_count=30, PID\}$. Before distribution of the protected excerpt to the second user, the EECM is encrypted using the second user's public key $Kpub_b$, i.e. $EECM\_ENC = RSA\text{-}1024\text{-}ENC (Kpub_b, EECM)$.
Upon reception of the protected excerpt, the second user's security module decrypts the 1024-bit EECM_ENC using the second user's private key $Kpriv_b$ and then generates the control words $CW_j[6]$ for the TS packets in the crypto-periods $\{j, 6\}$ as follows:

$$CW_j[6] = h^j(Ip||CW\_p') \oplus h^{29-j}(Ip||CW\_p'') \, , \, j= 0\ldots29.$$

With excerpt protected using the second preferred embodiment of the present invention, an attacker that has access to two non-consecutives excerpts of the content is not be able to reconstruct control words for TS packets located between the two excerpts, unless the excerpts belongs to the same master key crypto-period.

The invention also relates to a computer program product, such as a DVD or a CD-ROM, that stores instructions, which, when executed by a processor, causes the processor to perform the method of the present invention.

It will be appreciated that the present invention can enable a user to share a portion of a protected content, without making the entire content available to the recipient. The solution of the present invention can be efficient in terms of computational costs, bandwidth-efficient (less data is transferred), and, in the second embodiment, resistant to collusion attacks, while it at the same time can be implemented with practically any existing copy protection system.

Each feature disclosed in the description and (where appropriate) the claims and drawings may be provided independently or in any appropriate combination. Reference numerals appearing in the claims are by way of illustration only and shall have no limiting effect on the scope of the claims.

**Claims**

1. A device (200) for generating n control words for encryption or decryption of n contiguous units of a content item, wherein n is an integer, the device (200) comprising a processor adapted to:

   - obtain a first key $K_{start}$ and a second key $K_{end}$;
   - generate a first ordered set of n subkeys $K1_0$ -$K1_{n-1}$ by iteratively applying a first one-way function to the first key $K_{start}$ and a second ordered set of n subkeys $K2_0$ -$K2_{n-1}$ by iteratively applying a second one-way function to the second key $K_{end}$;
   - generate n control words by iteratively using a combination operation to generate control word $i$ from subkey $K1_i$ from the first ordered set of n subkeys and subkey $K2_{n-i-1}$ from the second ordered set of n subkeys, wherein $0 \leq i \leq n-1$; and
   - output the n generated control words.

2. The device of claim 1, wherein at least one of the first one-way function and the second one-way function is a hash function.

3. The device of claim 1 or 2, wherein at least one of the first one-way function and the second one-way function is public key encryption.

4. The device of claim 1, wherein the combination operation is XOR.

5. The device of claim 1, wherein the combination operation is concatenation or public key encryption or symmetric key encryption.

6. The device of claim 1, wherein the processor is further adapted to separate the content item into a plurality of parts, each part comprising a plurality of units; and to generate control words independently for each part.

7. The device of claim 1, wherein the processor is further adapted to:

   - generate a license for the content item of which unit $i$ has been encrypted using generated control word $i$, the license comprising the first key $K_{start}$, the second key $K_{end}$ and the integer n; and
   - transmit the license to a receiver.

8. The device of claim 7, wherein the content item is an excerpt of a longer content item, the longer content item being encrypted using control words generated from a third key and a fourth key, and wherein the processor is further adapted to:

   - generate the first key $K_{start}$ by iterative application of the first one-way function to the third key; and
   - generate the second key $K_{end}$ by iterative application of the second one-way function to the fourth key.

9. The device of claim 1, wherein the content item is encrypted and the processor is further adapted to decrypt the encrypted content item using the generated control words.

10. A method for generating n control words for encryption or decryption of n contiguous units of a content item, wherein n is an integer, the method comprising, at a device (200), the steps of:

- obtaining a first key $K_{start}$ and a second key $K_{end}$;
- generating a first ordered set of n subkeys $K1_0$-$K1_{n-1}$ by iteratively applying a first one-way function to the first key $K_{start}$ and a second ordered set of n subkeys $K2_0$-$K2_{n-1}$ by iteratively applying a second one-way function to the second key $K_{end}$;
- generating n control words by iteratively using a combination operation to generate control word $i$ from subkey $K1_i$ from the first ordered set of n subkeys and subkey $K2_{n-i-1}$ from the second ordered set of n subkeys, wherein $0 \leq i \leq$ n-1; and
- outputting the n generated control words.

**11.** The method of claim 10, wherein at least one of the first one-way function and the second one-way function is a hash function.

**12.** The method of claim 10, wherein the combination operation is XOR.

**13.** The method of claim 1, further comprising the step of separating the content item into a plurality of parts, each part comprising a plurality of units; and wherein the steps of claim 10 are performed independently for each part.

**14.** A method of generating a content license for a content item being encrypted using control words generated by the method of claim 10, the method comprising, at a device (200), the steps of:

- generating (S43) a license for the content item of which unit $i$ has been encrypted using generated control word $i$, the license comprising the first key $K_{start}$, the second key $K_{end}$ and the integer n; and
- transmitting (S44) the license to a receiver.

**15.** The method of claim 14, wherein the content item is an excerpt of a longer content item, the longer content item being encrypted using control words generated from a third key and a fourth key, and wherein the method further comprises the steps of:

- generating the first key $K_{start}$ by iterative application of the first one-way function to the third key; and
- generating the second key $K_{end}$ by iterative application of the second one-way function to the fourth key.

110 110 110 110

| $U_0$ | $U_1$ | $U_2$ | | $U_n$ | ↖↝100 |

Scrambling

| $PU_0$ | $PU_1$ | $PU_2$ | | $PU_n$ | ↖↝120 |

130 130 130 130

Figure 1

210

Master CW → | Key generator | ← ↖↝200

$CW_j$

Block index,

$U_j$ → | Scrambler | ←

220 ↝

$PU_j$

Figure 2

Figure 3

Figure 4

Europäisches
Patentamt

European
Patent Office

Office européen
des brevets

# EUROPEAN SEARCH REPORT

Application Number

EP 12 15 2266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MOHAMED KARROUMI ET AL: "Hash-Based Key Management Schemes for MPEG4-FGS", 13 April 2009 (2009-04-13), INFORMATION SECURITY PRACTICE AND EXPERIENCE, SPRINGER BERLIN HEIDELBERG, BERLIN, HEIDELBERG, PAGE(S) 245 - 256, XP019115950, ISBN: 978-3-642-00842-9 * abstract * * Chapter 1, up to section "Background and related work"; Chapter 2, up to section "Proposition 1"; Chapter 4, up to section "Proposition 2" * | 1-15 | INV. H04L9/08 H04L9/32 |
| X,D | JOYE M ET AL: "One-way cross-trees and their applications", LECTURE NOTES IN COMPUTER SCIENCE - LNCS, SPRINGER, DE LECTURE NOTES IN COMPUTER SCIENCE - LNCS, SPRINGER, DE, vol. 2274 12 February 2002 (2002-02-12), pages 346-356, XP007918779, ISSN: 0302-9743, DOI: 10.1007/3-540-45664-3_25 Retrieved from the Internet: URL:http://citeseerx.ist.psu.edu/viewdoc/versions?doi=10.1.1.1.5888 | 1,2,10,11 | |
| A | * Section 4.1, "key escrow" * | 3-9, 12-15 | TECHNICAL FIELDS SEARCHED (IPC) H04L |
| A | US 2006/034453 A1 (LIU YEN-FU [TW]) 16 February 2006 (2006-02-16) * abstract; claims 1,4,8,9; figure 1 * * paragraphs [0012] - [0017] * | 1-15 | |

-/--

The present search report has been drawn up for all claims

| Place of search | Date of completion of the search | Examiner |
|---|---|---|
| Munich | 30 April 2012 | Wolters, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

# EUROPEAN SEARCH REPORT

Application Number

EP 12 15 2266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 207 340 A1 (THOMSON LICENSING [FR]) 14 July 2010 (2010-07-14) * abstract; claims 1,2,6,7 * * paragraphs [0007] - [0010], [0018] - [0023] *  ----- | 1-15 | |
| A | EP 1 804 508 A1 (IRDETO ACCESS BV [NL]) 4 July 2007 (2007-07-04) * abstract; claims 1-11,14-16 * * paragraphs [0008] - [0022] *  ----- | 1-15 | |

TECHNICAL FIELDS
SEARCHED      (IPC)

The present search report has been drawn up for all claims

| Place of search | Date of completion of the search | Examiner |
|---|---|---|
| Munich | 30 April 2012 | Wolters, Robert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

EP 2 487 829 A1

## ANNEX TO THE EUROPEAN SEARCH REPORT
## ON EUROPEAN PATENT APPLICATION NO.

EP 12 15 2266

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2012

| Patent document cited in search report | | Publication date | Patent family member(s) | | Publication date |
|---|---|---|---|---|---|
| US 2006034453 | A1 | 16-02-2006 | NONE | | |
| EP 2207340 | A1 | 14-07-2010 | CN | 102349306 A | 08-02-2012 |
| | | | EP | 2207340 A1 | 14-07-2010 |
| | | | EP | 2377303 A1 | 19-10-2011 |
| | | | TW | 201031199 A | 16-08-2010 |
| | | | US | 2012014522 A1 | 19-01-2012 |
| | | | WO | 2010079219 A1 | 15-07-2010 |
| EP 1804508 | A1 | 04-07-2007 | AT | 451791 T | 15-12-2009 |
| | | | AU | 2007200006 A1 | 19-07-2007 |
| | | | BR | PI0700001 A | 16-10-2007 |
| | | | CA | 2572345 A1 | 03-07-2007 |
| | | | CN | 101005356 A | 25-07-2007 |
| | | | EP | 1804508 A1 | 04-07-2007 |
| | | | ES | 2337920 T3 | 30-04-2010 |
| | | | JP | 2007184929 A | 19-07-2007 |
| | | | KR | 20070073622 A | 10-07-2007 |
| | | | TW | 200840361 A | 01-10-2008 |
| | | | US | 2007177733 A1 | 02-08-2007 |
| | | | ZA | 200700061 A | 27-05-2009 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060034453 A

- EP 2197145 A

**Non-patent literature cited in the description**

- ne-Way Cross-Trees and Their Applications. **MARC JOYE ; SUNG-MING YEN.** Public Key Cryptography, vol. 2274 of Lecture Notes in Computer Science. Springer Verlag, 2002, vol. 2274, 346-356

- **S. FRANKEL ; R. GLENN ; S. KELLY.** The AES-CBC Cipher Algorithm and Its Use with IPsec. *RFC 3602, Internet Soc.,* September 2003, http://rfc.sunsite.dk/rfc/rfc3602.html
- Optimal Asymmetric Encryption - How to Encrypt with RSA. **M. BELLARE ; P. ROGAWAY.** EUROCRYPT 1994. Springer, 1995, vol. 950, 92-111